# EUROPÄISCHE PATENTSCHRIFT

(11) **EP 1 636 296 B1**
(45) Veröffentlichungstag und Bekanntmachung des Hinweises auf die Patenterteilung: **14.11.2007**
(21) Anmeldenummer: 04734240.7
(22) Anmeldetag: 21.05.2004
(51) Int. Cl.: C08J 7/00

(54) **POLYCARBONAT-FORMKÖRPER MIT GERINGER STAUBANZIEHUNG**
POLYCARBONATE MOULDED BODIES WITH LOW DUST ATTRACTION
CORPS MOULE EN POLYCARBONATE PRESENTANT UN FAIBLE POUVOIR D'ATTRACTION DE POUSSIERE

(30) Priorität: 05.06.2003 DE 10325437
(43) Veröffentlichungstag der Anmeldung: 22.03.2006
(73) Patentinhaber: Bayer MaterialScience AG, 51368 Leverkusen (DE)
(72) Erfinder: BIER, Peter, 47800 Krefeld (DE); CAPELLEN, Peter, 47803 Krefeld (DE)
(86) Internationale Anmeldenummer: PCT/EP2004/005526
(87) Internationale Veröffentlichungsnummer: WO 2004/108803

(56) Entgegenhaltungen:
- WO-A-20/04044627
- US-A- 3 200 182
- US-A- 5 008 148

## Beschreibung

Die Anmeldung betrifft ein Verfahren zur Herstellung von Polycarbonat-Formkörpern mit geringer Staubanziehung.

Bei Kunststofffonnkörpern ist die Anlagerung von Staub unter Ausbildung von Staubfiguren ein weit verbreitetes Problem. Siehe hierzu z.B. Saechtling, Kunststoff-Taschenbuch, 26. Ausgabe, Hanser Verlag, 1995, München, S. 140 f. Besonders störend und die Funktion einschränkend sind Staubablagerungen bei transparenten Formkörpern. Solche Formkörper werden zum Beispiel für den Bereich optischer Datenspeicher, Elektrotechnik, Automobilbau, im Bausektor, für Flüssigkeitsbehälter oder für andere optische Anwendungen eingesetzt. Für all diese Anwendungen ist eine Staubanlagerung unerwünscht und kann die Funktion beeinträchtigen.

Eine bekannte Methode die Staubanlagerung auf Kunststoffkörpern zu vermindern ist der Einsatz von Antistatika. In der Literatur sind für Thermoplasten Antistatika beschrieben (siehe z.B. Gächter, Müller, Plastic Additives. Hanser Verlag, München, 1996, S. 749 ff), welche die Staubanlagerung einschränken. Diese Antistatika verbessern die elektrische Leitfähigkeit der Kunststoffformmassen und leiten so Oberflächenladungen, welche bei der Herstellung und beim Gebrauch bilden ab. Somit werden Staubpartikel weniger angezogen und folglich gibt es eine geringere Staubanlagerung.

Bei den Antistatika unterscheidet man im allgemeinen zwischen internen und externen Antistatika. Ein externes Antistatikum wird nach der Verarbeitung auf den Kunststoffformkörpern aufgetragen, ein internes Antistatikum wird als Additiv den Kunststoffformmassen zugesetzt. Aus wirtschaftlichen Gründen ist die Verwendung von internen Antistatika meist wünschenswert, da keine weiteren Arbeitsschritte zur Auftragung des Antistatikums nach der Verarbeitung nötig sind. In der Literatur sind bislang wenige interne Antistatika beschrieben worden, welche auch völlig transparente Formkörper insbesondere mit Polycarbonat bilden.

JP-A 06-228420 beschreibt aliphatische Sulfonsäureammoniumsalze in Polycarbonat als Antistatikum. Diese Verbindungen führen jedoch zu Molekulargewichtsabbau. JP-A 62-230835 beschreibt den Zusatz von 4 % Nonylphenylsulfonsäuretetrabutyl-phosphonium in Polycarbonat.

Ein Nachteil der bekannten internen Antistatika ist, dass diese in relativ hohen Konzentrationen eingesetzt werden müssen, um den antistatischen Effekt zu erzielen. Dadurch werden aber die Materialeigenschaften der Kunststoffe in unerwünschter Weise verändert.

Die externen Antistatika besitzen den Nachteil, dass sie häufig bei Temperatureinwirkung und intensiver Lichteinstrahlung vergilben. Weiterhin werden sie durch äußere Einflüsse wie Abwischen, oder sich bildende Wasserfilme leicht entfernt.

Aufgabe der Erfindung was es daher, Verfahren zur Herstellung von Polycarbonat-Formkörpern mit geringer Staubanziehung bereitzustellen, wobei die Materialeigenschaften des Kunststoffs nicht negativ beeinflusst werden sollten.

Es wurde nun überraschend gefunden, dass diese Aufgabe gelöst wird durch ein Verfahren, welches eine Oberflächenbehandlung der Polycarbonat-Formkörper durch Beflammen, Coronabehandlung und/oder Plasmaaktivierung die Oberflächencharakteristik des Materials so verändert wird, dass keine Staubanziehung mehr auftritt, ohne die Materialeigenschaften des Formkörpers zu verändern.

Gegenstand der Erfindung ist somit ein Verfahren zur Herstellung von Polycarbonat-Formkörpern mit geringer Staubanziehung, dadurch gekennzeichnet, dass es eine Oberflächenbehandlung der Polycarbonat-Formkörper durch Beflammen, Coronabehandlung und/oder Plasmaaktivierung umfasst.

Vermutlich wird durch die Oberflächenbehandlung die Oberflächenspannung angehoben und dabei insbesondere der polare Anteil der Oberfläche dramatisch erhöht. Besonders gute Ergebnisse werden erzielt, wenn der polare Anteil der Oberfläche mehr als 20 % beträgt.

Die Bestimmung der Oberflächenspannung und des polaren Anteils erfolgt dabei nach bekannten Verfahren, die u.a. in der folgenden Literatur beschrieben sind: "Einige Aspekte der Benetzungstheorie und ihre Anwendungen auf die Untersuchung der Veränderung der Oberflächeneigenschaften von Polymeren" in Farbe und Lack, 77. Jahrg., Nr.10, 1971, S.997 ff; "Determination of contact angles and solid surface tensions of poly(4-X-styrene) films" in Acta Polym. 1998, 49, S.417-426; "Wettability and microstructure of polymer surfaces: stereochemical and conformational aspects" in Apparent and Microscopic Contact Angles, pp. 111- 128.

Gemäß einer ersten Ausführungsform der Erfindung erfolgt die Oberflächenbehandlung durch Beflammen.

Bei der Beflammung wirkt eine offene Flamme, vorzugsweise deren oxidierender Teil, auf die Oberfläche des Kunststoffformkörpers ein. Es genügt in der Regel eine Einwirkungsdauer von ca. 0,2 s, abhängig von Form und Masse des zu aktivierenden Formteils.

Die Erfahrung zeigt, dass eine Gemischeinstellung mit einem leicht oberhalb des stöchiometrischen Gemisches liegenden Luftanteils (leicht mageres Gemisch) in der Regel den besten Behandlungserfolg ergibt. Für die oxidierende Wirkung der Flamme ist sowohl der beim Verbrennungsprozess aus der Außenwelt herangezogene Sauerstoff, als auch vor allem der im zugefiihrten Luft-Gas-Gemisch enthaltene Sauerstoff von Bedeutung.

Das zugeführte Luft-Gas-Gemisch hat auch einen starken Einfluss auf die Charakteristik der Flamme, so ist eine mit einem "fetten" Gemisch (hoher Gasanteil) betriebene Flamme ebenso instabil wie eine mit einem "mageren" Gemisch (niedriger Gasanteil) betriebene.

Standardvorgabewerte für die Gemischeinstellung sind folgende Luft/Gas-Verhältnisse:

| | |
|---|---|
| Luft zu Methan (Erdgas) | ≥ 8:1 |
| Luft zu Propan (LPG) | ≥ 25:1 |
| Luft zu Butan | ≥ 32:1 |

Neben der Gemischeinstellung sind Brennereinstellung und Brennerabstand für eine effektive Beflammung ausschlaggebend. Die Brennerleistung beeinflusst die gesamte Flammencharakteristik (Temperatur, Ionenverteilung, Größe der aktiven Zone). Mit einer Änderung der Brennerleistung ändert sich die Flammenlänge und damit ergibt sich wiederum der Abstand vom Brenner zum Produkt.

Die Brennerleistung, meist in kW ausgedrückt, ist der aktuell fließenden Gasmenge (Liter pro Minute) direkt proportional. Eine zu geringe Leistung führt zu einer geringen Behandlung, d.h. die Oberflächenenergie wird nicht ausreichend erhöht. Bei einer höheren Leistung stellt sich auch eine höhere Ionenkonzentration ein, und die Behandlung wird intensiviert. Eine zu hohe Leistung führt zu hoher Materialtemperatur und damit zum Anschmelzen der Oberfläche. Zu erkennen ist dies daran, dass die Oberfläche nach dem Beflammen glänzen oder matt sind.

Die Arbeitsgeschwindigkeit und damit die mögliche Kontaktzeit wird üblicherweise vom Anwender vorgegeben, dadurch ergibt sich die Anforderung an die Brennerleistung. Die Arbeitsgeschwindigkeit und die Brennerleistung sollten im Rahmen von Versuchen immer optimal aufeinander abgestimmt werden.

Es hat sich als besonders vorteilhaft herausgestellt, wenn die Beflammung in einer Durchlaufbeflammungsanlage bei einer Durchlaufgeschwindigkeit von 1 bis 20 m/min, insbesondere 2 bis 10 m/min, durchgeführt wird.

Gemäß einer zweiten Ausführungsform der Erfindung wird die Oberflächenbehandlung durch Corona-Behandlung durchgeführt.

Bei konventionellen (direkten) Corona-Systemen wird das zu behandelnde Teil direkt in den Entladungsspalt einer Corona-Entladung eingeführt. Bei der Folienbehandlung wird der Spalt von der Behandlungswalze, welche die Bahn führt, und einer Behandlungselektrode gebildet, die sich etwa 1,5 bis 2,0 mm über der Walze befindet. Bei größeren Elektrodenabständen muss zum Zünden der Entladung eine erhöhte elektrische Spannung aufgebracht werden, so dass der Energieinhalt der Einzelentladung steigt und sich zunehmend heiße Lichtbogenentladungen ausbilden können, die man für eine schonende Behandlung des Substrats vermeiden sollte.

Typische Leistungsdichten dieser konventionellen Elektroden liegen bei 1 W/mm für einen einzelnen Elektrodenstab.

Bei den indirekten Corona-Systemen findet die elektrische Entladung vor dem Werkstück statt. Ein Luftstrom lenkt die Entladungsfunken auf das zu behandelnde Werkstück aus, so dass nur eine indirekte Berührung mit der Entladung stattfindet. Ein Prinzip der indirekten Corona-Behandlung besteht darin, die Entladung zwischen zwei metallischen Stift-Elektroden brennen zu lassen. Die zur Ausbildung einer Corona-Entladung notwendige Strombegrenzung wird auf elektronischem Wege vorgenommen. Die Entladungsfunken werden mit Luft ausgelenkt. Hierbei werden Behandlungsabstände erreicht, die im Bereich von 5 - 20 mm liegen. Aufgrund dieser großen Entladungsweite ist es unbedingt notwendig, durch konstruktive Maßnahmen den Energieinhalt der Einzelentladungen zu minimieren.

Durch hohe Betriebsfrequenzen von etwa 50 KHz und optimierter Entladungsgeometrie und Luftführung kann die Entladungsstärke auf 100 W reduziert werden. Ein geeignetes System ist z.B. die Corona-Gun CKG der Fa. Tigris. Hierbei werden Einzelelektroden mit ca. 20 mm Arbeitsbreite verwendet.

Durch Kombination vieler Elektroden können auch Polycarbonat-Formkörper mit komplizierten Geometrien behandelt werden. Die Anordnung kann an dreidimensionale Teile angepasst werden.

Die Vorbehandlung findet mit kalten Corona-Entladungen statt, so dass keine wesentliche Erwärmung des Formteils stattfindet. Die Oberflächen thermisch empfindlicher Kunststoffe werden daher optisch nicht verändert, Schäden wie beispielsweise Streifen und Wolken treten nicht auf.

Für die Vorbehandlung von dreidimensionalen Produkten stehen verschiedene Coronatechniken zur Verfügung wie Niederfrequenz (NF) Systeme, Hochfrequenz (HF) Systeme und Spot-Generatoren, die je nach Produkt zum Einsatz kommen können.

Spot-Generatoren erzeugen eine Hochspannungsentladung, die mit Hilfe von Luft auf das Substrat gepresst wird, ohne eine Gegenelektrode zu verwenden. Ein Spot-Generator kann leicht in existierende Produktionslinien eingebaut werden, ist einfach zu bedienen und ist in der Regel mit Timer- und Alarmfunktionen ausgestattet. Die Vorbehandlungsbreite beträgt 45 - 65 mm, so dass eine Vielfalt von Produkten vorbehandelt werden kann. Der Spot-Generator kann auch mit zwei oder mehr Entladeköpfen ausgestattet sein.

Bei der Hochfrequenzcorona wird eine Hochspannungsentladung mit einer Frequenz von 20 - 30 KHz erzeugt, die zwischen zwei Elektroden in Luft ein Coronafeld bildet. Diese Corona aktiviert die Oberfläche und erzeugt so eine höhere Haftung und Benetzbarkeit. Coronaaktivierung von Platten und einfachen 3D-Geometrien ist in hohen Geschwindigkeiten möglich.

Zur Vorbehandlung von komplex geformten Teilen eignet sich ein Coronatunnel (z.B. Fa. Tantec), mit der in der Produktionslinie die gesamte Oberfläche eines Körpers vorbehandelt werden kann. Durch die besondere Konstruktion der Elektroden wird eine absolut homogene Oberflächenenergie erreicht. Dabei können auch senkrechte Seitenwände und 90°-Winkel behandelt werden. Der Coronatunnel wird in der Regel produktspezifisch konstruiert und kann auch in bestehende Anlagen integriert werden. Er ermöglicht beispielsweise eine berührungslose Vorbehandlung der kompletten Oberseite von Teilen bis 100 mm Höhe und 2000 mm Breite.

Vorzugsweise wird die Coronabehandlung in einer Coronadurchlaufanlage bei einer Durchlaufgeschwindigkeit von 1 bis 20 m/min, insbesondere 2 bis 10 m/min und/oder einer Leistung von 500 bis 4000 W, insbesondere 1500 bis 3500 W, durchgeführt.

Gemäß einer dritten Ausführungsform der Erfindung erfolgt die Oberflächenbehandlung durch Plasmaaktivierung. Vorzugsweise wird die Plasmaaktivierung in einer Kammer bei einem Druck von 1 bis 10⁻² mbar, insbesondere 10⁻¹ bis 10⁻² mbar und einer Leistung von 200 bis 4000 W, insbesondere 1500 bis 3500 W mit einem Niederfrequenz-Generator und in Gegenwart eines Prozessgases, wie beispielsweise Sauerstoff oder insbesondere Luft durchgeführt (z.B. BPA 2000 Standart System der Fa. Balzers).

In einer weiteren Ausführungsform der Erfindung hat es sich als besonders effektiv erwiesen, um die Substratoberflächen staubanziehungsfrei auszustatten, zusätzlich zur Beflammung im gleichen Arbeitsgang metalloxidische Schichten auf das Substrat aufzubringen. Besonders geeignet ist dabei, ein Zusatz von Aluminium-, Zinn-, Indium-, Silizium-, Titan-, Zirkon- und/oder Cerverbindungen in das Brenngas/Luftgemisch. Die Dosierung der Zusatzstoffe zur Herstellung der staubanziehungsfreien Deckschicht arbeitet nach dem Prinzip einer dosierten Zumischung eines organischen Precursors oder eines Aerosols in dem Luftstrom. Die Dosierung erfolgt durch eine prozessgesteuerte Verdampfung oder Sprühnebel. Geeignete Geräte sind beispielsweise der Brenner SMB22 in Kombination mit den Steuergeräten der FTS-Serie der Firma arcogas GmbH, Rotweg 24 in Mönsheim, Deutschland. Als organische Precursors kommen leicht verdampfbare metallorganische Verbindungen insbesondere Alkoholate oder Acetate der obigen Metalle in Frage. Als besonders günstig haben sich dabei Siliziumtetra-alkoxide erwiesen.

Zur Herstellung von Aerosolen eignen sich vor allem wässrige Dispersionen von Metalloxid-Nanopartikeln, die in den Luftstrom eingedüst und über die Flamme auf dem Substrat niedergeschlagen werden.

Im Vergleich zu dem in US 5,008,148 beschriebenen Plasmaverfahren ist das Aufbringen der hier beanspruchten metalloxidischen Schichten wesentlich einfacher und kostengünstiger.

US 5,008,148 beschreibt das Beschichten von Polycarbonat- oder Polyphenylensulfid- Artikeln mit Metalloxid-Schichten nach einem Niederdruck-Plasmaverfahren zum UV-Schutz. Die nach US 5,008,148 hergestellten Artikel sind nicht staubanziehungsfrei.

Als transparente Kunststoff werden bevorzugt transparente Thermoplaste genutzt, besonders bevorzugt die Polymerisate von ethylenisch ungesättigten Monomeren und/oder Polykondensate von bifunktionellen reaktiven Verbindungen.

Besonders geeignete Kunststoff sind Polycarbonate oder Copolycarbonate auf Basis von Diphenolen, der Poly- oder Copolyacrylate und Poly- oder Copolymethacrylate wie z.B. Poly- oder Copolymethylmethacrylat, auch als Copolymere mit Styrol wie z.B. transparentes Polystyrolacrylnitril (SAN), ferner transparente Cycloolefine, Poly- oder Copolykondensate der Terephthalsäure, wie z.B. Poly- oder Copolyethylenterephthalat (PET oder CoPET) oder glycol-modifiziertes PET (PETG).

Der Fachmann erzielt ausgezeichnete Resultate mit Polycarbonaten oder Copolycarbonaten.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, á,á'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. dem Fachmann bekannt und beispielsweise in der Monographie "H. Schnell, Chemistry and Physics of Polycarbonates, Interscience Publishers, New York 1964" beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol 2,4,6-Trijodphenol, p-Jodphenol, sowie deren Mischungen.

Bevorzugter Kettenabbrecher ist p-tert.-Butylphenol.

Geeignete Monocarbonsäuren sind Benzoesäure, Alkylbenzoesäuren und Halogenbenzoesäuren.

Bevorzugte Kettenabbrecher sind die Phenole der Formel (I) 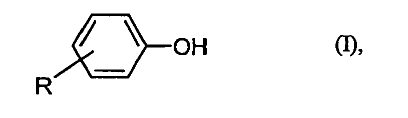 worin
- R: Wasserstoff, tert.-Butyl oder ein verzweigter oder unverzweigter C₈- und/oder C₉-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der thermoplastischen Polycarbonate sind dem Fachmann geläufig.

Es ist zur Erreichung von verbesserten Zusammensetzungen möglich, dass zusätzlich noch mindestens ein weiterer in thermoplastischen Kunststoffen, bevorzugt Poly- und Copolycarbonaten, üblicherweise vorhandener Zusatzstoff wie z.B. Flammschutzmittel, Füllmittel, Schaummittel, Farbstoffen, Pigmente, optische Aufheller, Umesterungskatalysatoren und Nukleierungsmittel o.ä., bevorzugt in Mengen von jeweils bis zu 5 Gew.-%, bevorzugt 0,01 bis 5 Gew.-% bezogen auf die gesamte Mischung, besonders bevorzugt 0,01 Gew.-% bis 1 Gew.-% bezogen auf die Menge Kunststoff enthalten ist.

Die so erhaltenen Polymerzusammensetzungen können nach den üblichen Methoden, wie z.B. Heißpressen, Spinnen, Extrudieren oder Spritzgießen, in geformte Gegenstände überführt werden, wie z.B. Spielzeugteile, aber auch Fasern, Folien, Bändchen, Platten, Stegplatten, Gefäße, Rohre und sonstige Profile. Die Polymerzusammensetzungen können auch zu Gießfolien verarbeitet werden. Die Erfindung betrifft daher weiterhin die Verwendung der erfindungsgemäßen Polymer-zusammensetzungen zur Herstellung eines geformten Gegenstandes. Von Interesse ist auch die Verwendung von Mehrschichtsystemen.

Hierbei wird die erfindungsgemäße Polymerenzusammensetzung in dünner Schicht auf einen geformten Gegenstand aus einem Polymer aufgebracht. Das Aufbringen kann zugleich oder unmittelbar danach mit der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Die erfindungsgemäßen Polycarbonatformmassen können zu Formkörpern verarbeitet werden, in dem man, beispielsweise, die in bekannter Weise isolierten Polycarbonate zu Granulat extrudiert und dieses Granulat, gegebenenfalls nach Zusatz der obengenannten Additive, durch Spritzguss zu verschiedenen Artikeln in bekannter Weise verarbeitet.

Die Formkörper aus den erfindungsgemäßen Polycarbonatformmassen innerhalb eines breiten Spektrums einsetzbar, besonders dort wo Staubanlagerung aus den erwähnten Gründen unerwünscht ist. Besonders geeignet ist die Anwendung bei optischen Datenträger, wie z.B. CDs, Automobilkomponenten, wie z.B. Verscheibungselemente, Kunststoffstreuscheiben, ferner die Anwendung bei extrudierten Platten, wie z.B. Massivplatten, Doppelstegplatten oder Multistegplatten, optional auch mit einer oder mehreren coextrudierten Schichten, sowie die Anwendung in Spritzgussteilen, wie Lebensmittelbehälter, Bestandteilen von Elektrogeräten, in Brillengläser oder Ziergegenständen.

Die erfindungsgemäßen Polycarbonatformmassen können auch mit üblichen anderen Polymeren gemischt werden. Besonders geeignet sind dabei transparente Kunststoffe. Als transparente Kunststoffe werden bevorzugt transparenten Thermoplaste verwendet, besonders bevorzugt die Polymerisate von ethylenisch ungesättigten Monomeren und/oder Polykondensate von bifunktionellen reaktiven Verbindungen.

Besonders geeignete Kunststoffe für diese Mischungen sind Poly- oder Copolyacrylate und Poly- oder Copolymethacrylate wie z.B. Poly- oder Copolymethylmethacrylat, aber auch besonders Copolymere mit Styrol wie z.B. transparentes Polystyrolacrylnitril (SAN), ferner transparente Cycloolefine, Poly- oder Copolykondensate der Terephthalsäure, wie z.B. Poly- oder Copolyethylenterephthalat (PET oder CoPET) oder glycol-modifiziertes PET (PETG).

### Beispiele

### Probenkörperherstellung

Platten der Ausmaße 100 x 150 x 3,2 mm wurden im Spritzgießverfahren aus Makrolon 3103 sowie Makrolon AL 2647 auf der Spritzgießmaschine FH160 der Fa. Klöckner hergestellt. Das Polycarbonat-Granulat war vor der Verarbeitung 12 Stunden bei 120°C in einem Umlauftrockenschrank auf eine Restfeuchte von unter 0,01 % getrocknet worden. Die Massetemperatur betrug 300°C. Das Werkzeug war auf 90°C temperiert. Der Schließdruck betrug 770 bar und der Nachdruck 700 bar. Die Gesamtzyklus-Zeit des Spritzgießvorgangs lag bei 48,5 Sekunden.

Makrolon 3103 ist ein UV-stabilisiertes Bisphenol A-Polycarbonat mit einem mittleren Molekulargewicht M_{w} (Gewichtsmittel) von ca. 31000 g/mol. Makrolon AL 2647, ebenfalls ein Bisphenol A-Polycarbonat, enthält ein Additivpaket aus UV-Stabilisator, Entformungsmittel und Thermostabilisator. Sein mittleres Molekulargewicht M_{w} beträgt ca. 26 500 g/mol.

Die zum Austesten verwendeten Kunststoffstreuscheiben bestanden ebenfalls aus Makrolon AL 2647. Sie wurden von einem Streuscheibenhersteller zur Verfügung gestellt.

Die Beflammung erfolgte mit dem Gerät FTS 401 der Fa. Arcotec, Mönsheim, Deutschland. Die Bandgeschwindigkeit betrug 20 ^{m}/ₘᵢₙ, die Luftmenge 120 und die Gasmenge 5,5 ¹/ₘᵢₙ. Für die Silikatisierung wurde die Gerätekombination FTS 201D / 9900017 verwendet.

### Staubtest

Um die Staubanlagerung im Laborversuch zu untersuchen, werden die gespritzten bzw. zusätzlich oberflächenbehandelten Platten einer Atmosphäre mit aufgewirbeltem Staub ausgesetzt. Dazu wird ein 2-1-Becherglas mit einem 80 mm langen Magnetrührerstab mit dreieckigem Querschnitt mit Staub (Kohlenstaub/20 g Aktivkohle, Riedel-de-Haen, Seelze, Deutschland, Artikel Nr. 18 003) ca. 1 cm hoch gefüllt. Mit Hilfe eines Magnetrührers wird der Staub aufgewirbelt. Nach dem Stoppen des Rührers wird der Probekörper 7 sec lang dieser Staubatmosphäre ausgesetzt. Je nach verwendetem Probekörper setzt sich mehr oder weniger Staub auf den Probekörpern ab.

Die Beurteilung der Staubanlagerungen (Staubfiguren) wird visuell durchgeführt. Platten, welche Staubfiguren aufwiesen, wurden negativ (-) bewertet, praktisch staubfigurenfreie Platten mit (+) bewertet.

### Oberflächenspannung

Die Bestimmung der Oberflächenspannung erfolgte nach DIN EN 828 und der polare Anteil der Oberflächenspannung nach Gleichung (8) in "Einige Aspekte der Benetzungstheorie und ihre Anwendungen auf die Untersuchung der Veränderung der Oberflächeneigenschaften von Polymeren" in Farbe und Lack, 77. Jahrgang, Nr. 10, 1971, S. 997 ff.

### Versuchsergebnisse:

| Beispiel | Probekörper | Polycarbonat-Typ | Oberflächenbehandlung ¹⁾ | Staubtest |
|---|---|---|---|---|
| 1 | 100 x 150 mm Platte | Makrolon 3103 | keine | - |
| 2 | | Makrolon 3103 | 1x beflammt | + |
| 3 | | Makrolon 2647 | keine | - |
| 4 | | Makrolon 2647 | 1x beflammt | + / - |
| 5 | Kunststoffstreuscheibe | Makrolon 2647 | keine | - |
| 6 | | Makrolon 2647 | 1x beflammt | + / - |
| 7 | | Makrolon 2647 | Plasma behandelt | + |
| 8 | | Makrolon 2647 | Corona behandelt | + |
| 9 | 100 x 150 mm Platte | Makrolon 2647 | 1x beflammt und silikatisiert | + |
| 10 | | Makrolon 2647 | 2x beflammt und silikatisiert | + |
| 11 | | Makrolon 2647 | 3x beflammt | + |

## Patentansprüche

1. Verfahren zur Herstellung von Polycarbonat-Formkörpern mit geringer Staubanziehung, **dadurch gekennzeichnet, dass** die Polycarbonatoberfläche der Formkörper durch Beflammen mit dem oxidierenden Teil einer offenen Flamme, Beflammen mit einer Gemischeinstellung mit einem leicht oberhalb des stöchiometrischen Gemisches liegenden Luftanteils (leicht mageres Gemisch), Beflammen mit einem Gemisch mit einem Luft-zu-Methan (Erdgas)-Verhältnis von ≥ 8:1, Beflammen mit einem Gemisch mit einem Luft-zu-Propan (LPG)-Verhältnis von ≥ 25:1 oder Beflammen mit einem Gemisch mit einem Luft-zu-Butan-Verhältnis von ≥ 32:1, oder durch Coronabehandlung oder durch Plasmabehandlung in einer Plasmakammer bei 1 bis 10⁻² mbar und einer Leistung von 200 bis 4000 W in Gegenwart eines Prozessgases behandelt wird.

2. Verfahren zur Herstellung von Polycarbonat-Formkörpern nach Anspruch 1 **dadurch gekennzeichnet, dass** die Oberfläche der Polycarbonat-Formkörper einen polaren Anteil größer als 20 Prozent aufweist.

3. Verfahren nach Anspruch 1 oder 2, **dadurch gekennzeichnet, dass** die Oberfläche der Polycarbonat-Formkörper durch Beflammen und Abscheiden einer Schicht, die im wesentlichen aus einer oxydischen Verbindung von Silizium, Aluminium, Titan, Zirkon, Zinn, Indium und/oder Cer besteht und/oder durch Zusatz besonders leicht verdampfbarer Verbindungen und/oder Aerosole der obigen Elemente in das Brenngas- / Luftgemisch gebildet wird.

4. Verfahren nach Anspruch 3, **dadurch gekennzeichnet, dass** zur Erzeugung der besagten Schicht mindestens ein Tetra-alkoxysilan verwendet werden.

5. Verfahren nach Anspruch 1 oder 2, **dadurch gekennzeichnet, dass** die Oberflächenbehandlung in einer Beflammungsdurchlaufanlage bei einer Durchlaufgeschwindigkeit von 1 bis 40 ^{m}/ₘᵢₙ erfolgt.

6. Verfahren nach Anspruch 1 oder 2, **dadurch gekennzeichnet, dass** die Oberflächenbehandlung in einer Coronadurchlaufanlage bei einer Durchlaufgeschwindigkeit von 1 bis 20 ^{m}/ₘᵢₙ und/oder einer Leistung von 500 bis 4000 W erfolgt.

7. Verwendung der nach einem Verfahren gemäß einem der Ansprüche 1 bis 6 erhältlichen Polycarbonat-Formkörper für optische Anwendungen.

8. Kunststoffstreuscheiben enthaltend einem Polycarbonat-Formkörper erhältlich nach einem Verfahren gemäß einem der Ansprüche 1 bis 6.

## Claims

1. A method for producing polycarbonate mouldings exhibiting low dust attraction, **characterised in that** the polycarbonate surface of the moulding is treated by flame treatment with the oxidising part of an open flame, flame treatment with a mixture setting having an air content slightly above the stoichiometric mixture (slightly lean mixture), flame treatment with a mixture having an air-to-methane (natural gas) ratio of ≥ 8:1, flame treatment with a mixture having an air-to-propane (LPG) ratio of ≥ 25:1 or flame treatment with a mixture having an air-to-butane ratio of > 32:1, or by corona treatment or by plasma treatment in a plasma chamber at 1 to 10⁻² mbar and a power of 200 to 4000 W in the presence of a process gases.

2. A method for producing polycarbonate mouldings according to claim 1, **characterised in that** the surface of the polycarbonate moulding has a polar content of greater than 20 percent.

3. A method according to claim 1 or claim 2, **characterised in that** the surface of the polycarbonate moulding is formed by flame treatment and deposition of a layer which substantially consists of an oxide compound of silicon, aluminium, titanium, zirconium, tin, indium and/or cerium and/or is formed by addition of particularly readily vaporisable compounds and/or aerosols of the above elements to the fuel gas/air mixture.

4. A method according to claim 3, **characterised in that** at least one tetraalkoxysilane is used to produce said layer.

5. A method according to claim 1 or claim 2, **characterised in that** the surface treatment proceeds in a continuous flame treatment installation at a throughput rate of 1 to 40 m/min.

6. A method according to claim 1 or claim 2, **characterised in that** the surface treatment proceeds in a continuous corona installation at a throughput rate of 1 to 20 m/min and/or a power of 500 to 4000 W.

7. Use of the polycarbonate mouldings obtainable by a method according to any one of claims 1 to 6 for optical applications.

8. Plastics headlight lenses obtainable by a method according to any one of claims 1 to 6.

## Revendications

1. Procédé de fabrication de corps moulés en polycarbonate présentant un faible pouvoir d'attraction de poussière, **caractérisé en ce que** la surface du polycarbonate des corps moulés est traitée par flambage avec la partie oxydante d'une flamme nue, flambage avec un réglage de mélange comprenant une proportion d'air légèrement supérieure au mélange stoechiométrique (mélange légèrement maigre), flambage avec un mélange ayant un rapport air sur méthane (gaz naturel) > 8:1, flambage avec un mélange ayant un rapport air sur propane (LPG) > 25:1 ou flambage avec un mélange ayant un rapport air sur butane > 32:1, ou par traitement corona ou par traitement au plasma dans une chambre à plasma sous 1 à 10⁻² mbar et une puissance de 200 à 4000 W en présence d'un gaz de processus.

2. Procédé de fabrication de corps moulés en polycarbonate suivant la revendication 1, **caractérisé en ce que** la surface des corps moulés en polycarbonate présente une proportion polaire supérieure à 20 pour cent.

3. Procédé suivant la revendication 1 ou 2, **caractérisé en ce que** la surface des corps moulés en polycarbonate est formée par flambage et dépôt d'une couche qui est essentiellement constituée d'un composé oxydant de silicium, aluminium, titane, zirconium, étain, indium et/ou cérium et/ou par addition de composés particulièrement facilement évaporables et/ou aérosols des éléments ci-dessus dans le mélange gaz de combustion/air.

4. Procédé suivant la revendication 3, **caractérisé en ce qu'**on utilise au moins un tétraalcoxysilane pour la génération de la couche susdite.

5. Procédé suivant la revendication 1 ou 2, **caractérisé en ce que** le traitement de surface est effectué dans une installation de flambage en continu avec une vitesse de passage de 1 à 40 m/min.

6. Procédé suivant la revendication 1 ou 2, **caractérisé en ce que** le traitement de surface est effectué dans une installation de traitement corona en continu avec une vitesse de passage de 1 à 20 m/min et/ou une puissance de 500 à 4000 W.

7. Utilisation pour des applications optiques des corps moulés en polycarbonate réalisables suivant un procédé suivant l'une des revendications 1 à 6.

8. Diffuseurs en matière plastique contenant un corps moulé en polycarbonate pouvant être obtenu suivant un procédé selon l'une des revendications 1 à 6.
